# EUROPEAN PATENT SPECIFICATION

(11) **EP 2 103 418 B1**
(45) Date of publication and mention of the grant of the patent: **04.01.2012**
(21) Application number: 09160791.1
(22) Date of filing: 22.06.2006
(51) Int. Cl.: B29C 73/22, B29C 70/10, B29K 101/10, B29K 309/08, B29L 31/30

(54) **Self-repairing structure**
Selbst reparierende Struktur
Structure auto-réparatrice

(30) Priority: 30.06.2005 GB 0513498
(43) Date of publication of application: 23.09.2009
(62) Divisional of application: 06744278.0
(73) Proprietor: BAE Systems PLC, London SW1Y 5AD (GB)
(72) Inventor: Dunleavy, Micheal, Bristol, South Gloucestershire BS34 7QW (GB); Haq, Sajad, Bristol, South Gloucestershire BS34 7QW (GB)
(74) Representative: BAE SYSTEMS plc Group IP Department

(56) References cited:
- DE-A1- 4 107 618
- US-A1- 2001 050 032

## Description

This invention is concerned with fibre materials and is specifically concerned with structures in which hollow and/or solid fibres are combined in a single body to form a composite body that has self-repair capabilities and/or has the capability of providing indication both of when a repair is required and/or when a self-repair has been carried out. This is particularly applicable, but not limited to, what is called battle damage repair which may be improvised, or carried out rapidly in a battle environment in order to return damaged or disabled equipment to temporary service.

In US Patent No.6527849 to Dry, there is disclosed very broadly, many solutions to repair of articles using "vessels" (including pipettes, tubes, fibres and the like) in matrices comprising, *inter alia,* concrete media and other materials including such as may be embodied in aircraft, prosthetics and a number of other areas. The disclosure of Dry suggests using many different materials, reciting almost every useful polymeric material known at the time of the basic application as thermoplastic or thermosetting bonding, filling and repair agents.

German Patent No. DE4107618 discloses a fibre-bound material comprising hollow fibres filled with air-hardened resin or with resin to which hardening agent is added.

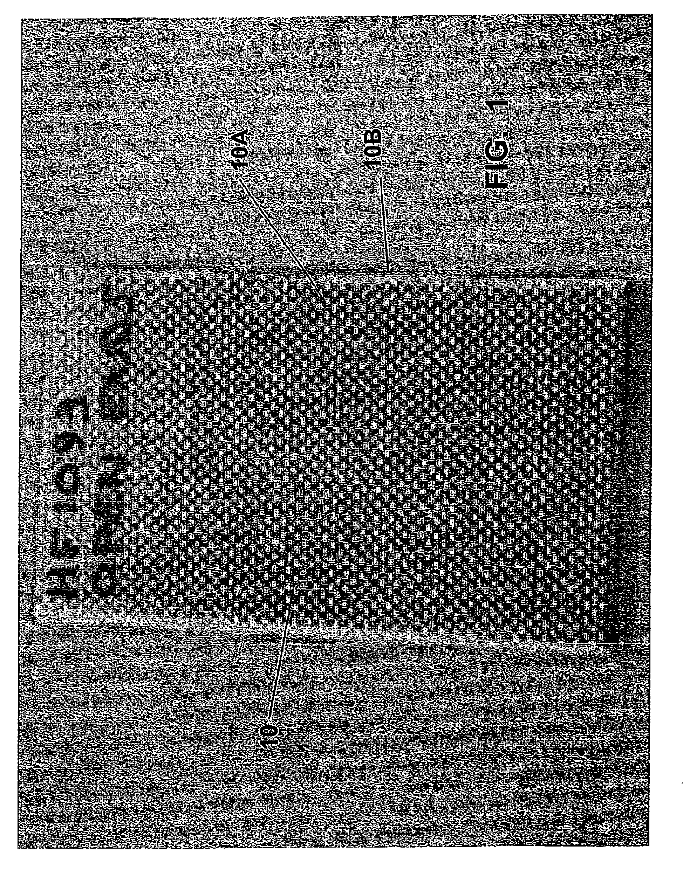

We have carried out many experiments in developing the present invention and have found that the placing of such materials as are mentioned in Dry in hollow fibres has resulted in repeated failure of whatever fluid is placed in such fibres to issue spontaneously from the fibre when a fibre is fractured. This has occurred a sufficient number of times during experiment for it not to be regarded as only due to chance. In Figures 1 to 8 of the accompanying drawings there are shown, as photographic images, the results of two of the experiments that we carried out are illustrated. As can be seen from Figure 1, the subject of the experiments was a preformed woven composite structure 10 which is formed of warp fibres 10A and weft fibres 10B, the weft fibres extending transversely from left to right in Figure 1. In both cases, the body was formed by embedding the hollow fibre fabric in a surrounding resin matrix to directly observe the effect of fibre fracture as it might behave in a rigid structure. The fabric was formed entirely of strata of woven hollow glass fibres of external diameter 10 - 12 microns and internal diameter 5 - 7 microns, all of which were filled with a coloured liquid material in the form of pure water which had a colouring agent provided by a commercial food dyestuff added thereto. The experiment itself was performed at ambient temperature.

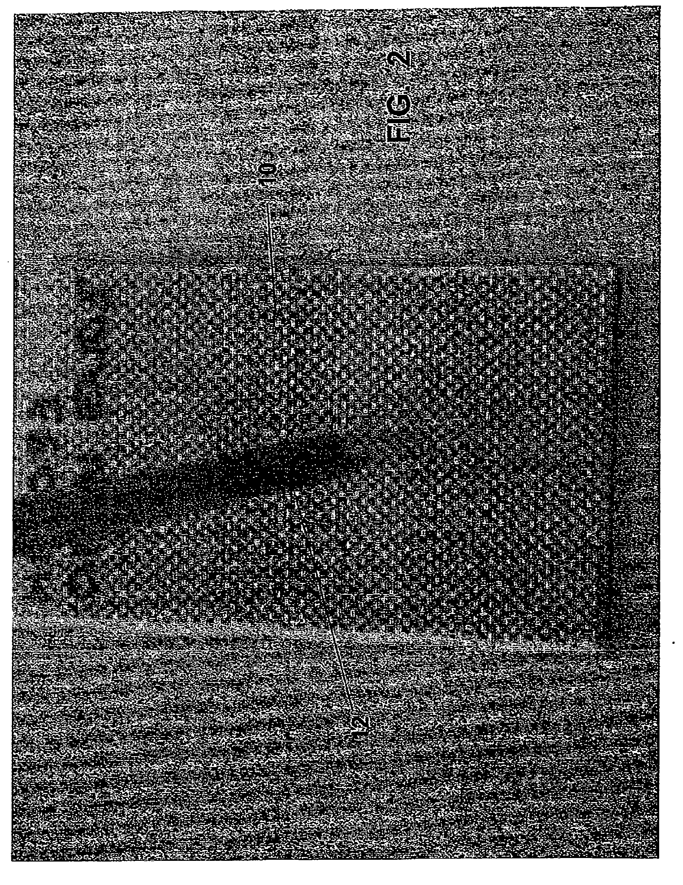

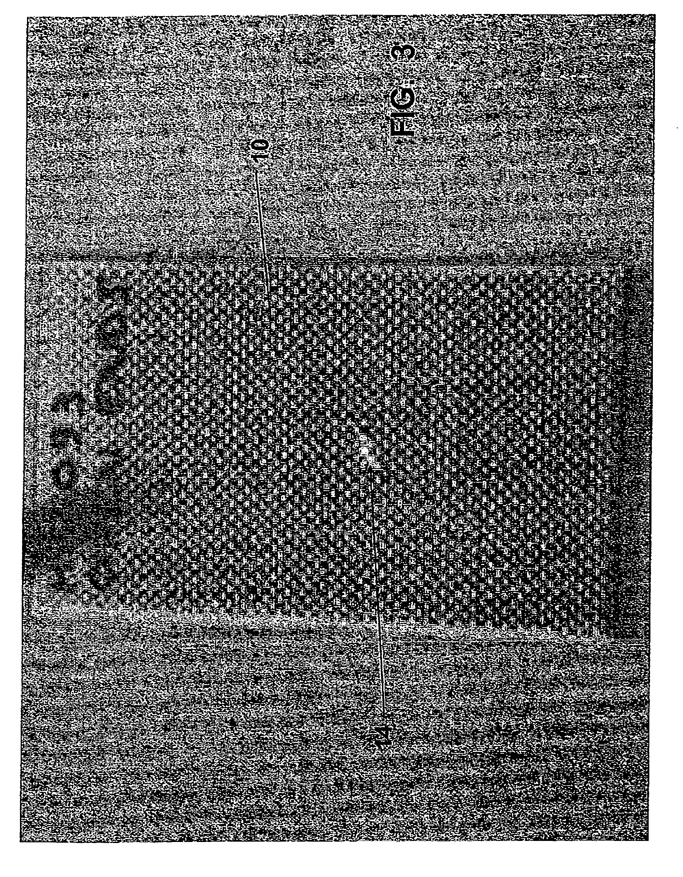

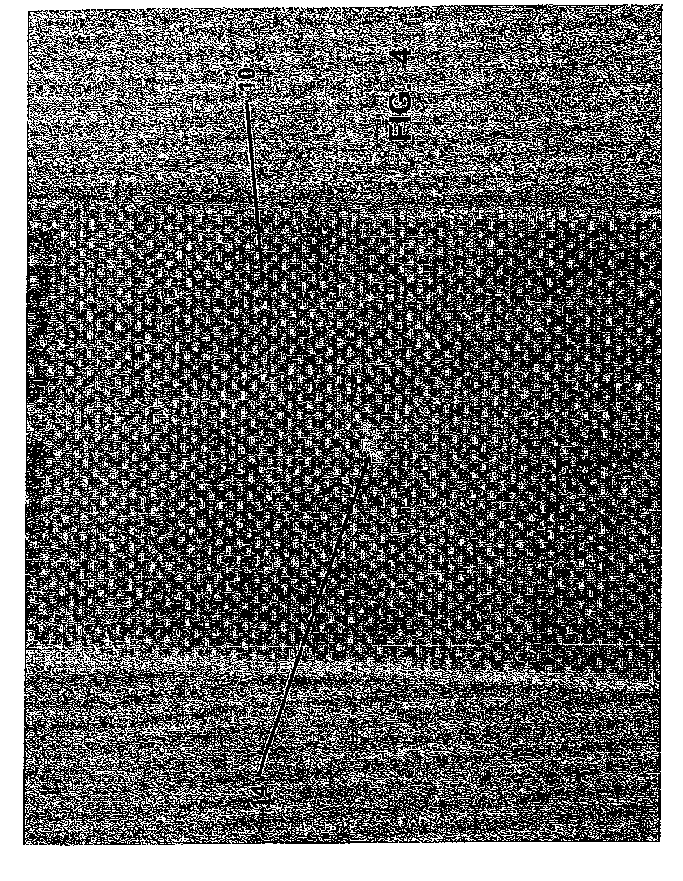

A sharp instrument provided by a screwdriver blade 12 was used to puncture the composite structure and in so doing to break some of the fibres thereof. Breakage of the fibres can be seen in Figure 2; the blade was inserted into the structure and then withdrawn immediately, having fractured the fibres of the structure. When the blade of the screwdriver was withdrawn from the structure, the structure was photographed immediately, as shown in Figure 3, and was then maintained under observation initially for several minutes; it was found that at no time did any of the coloured fluid within the fibres of the structure exude from the fibres. The structure was photographed at the end of a further period of approximately ten minutes and the condition of the structure at the end of that period can be seen in the photograph in Figure 4 where the rupture of the fibres is visible at 14, the rupture being clearly visible from the reflection of light from the broken portions of the fibres. Observation of the structure was thereafter conducted for a further period of one hour after the structure had been punctured and at no time was any change from Figure 4 detected or was any fluid seen to issue from the broken ends of the fibres. It was also found in subsequent experiments that changing the length of fibre in such a structure had no effect on the final result and that, whatever the length of fibre, no leaching or exuding of fluid from a broken fibre was observed.

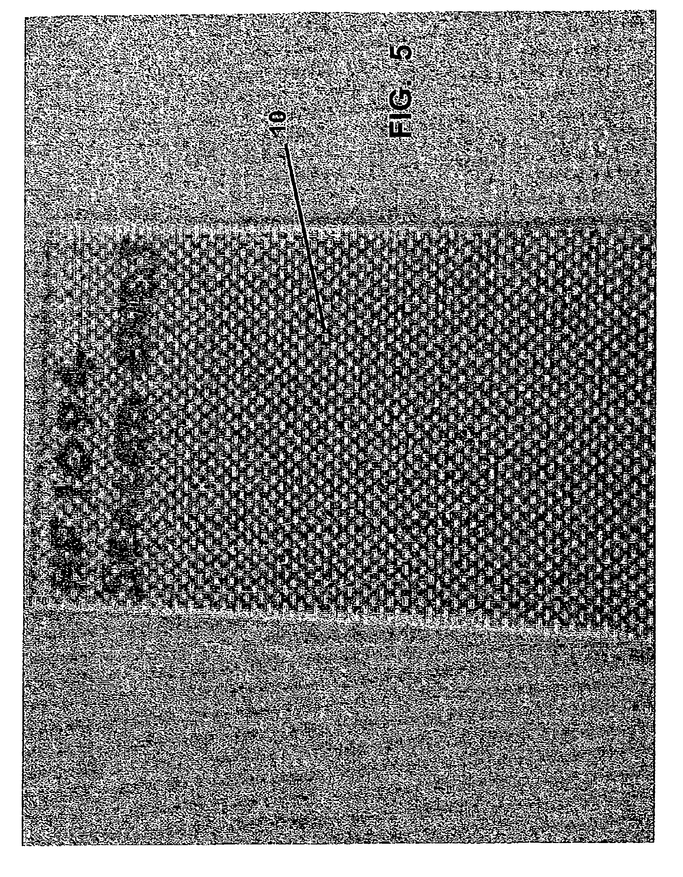

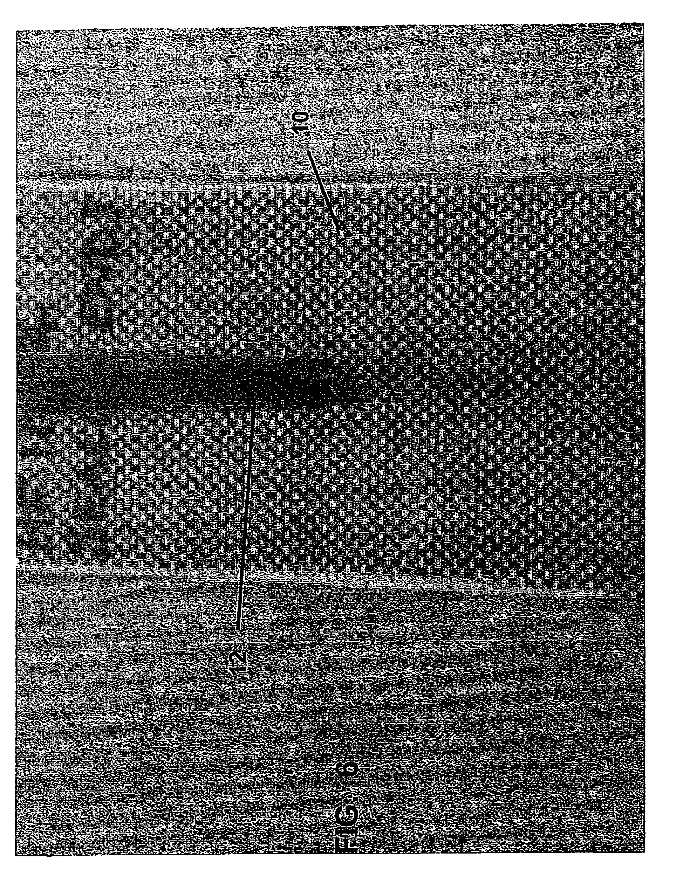

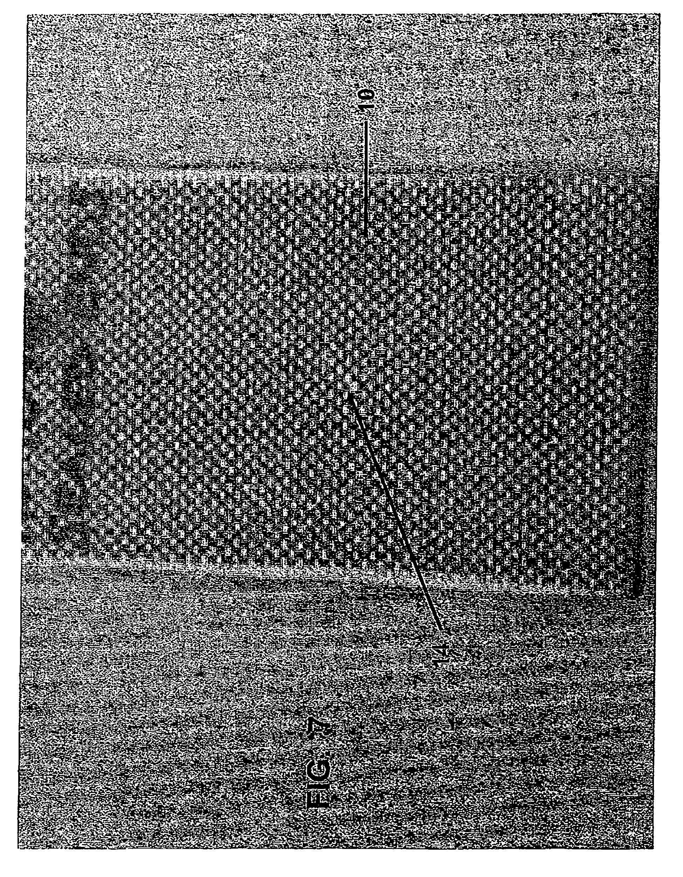

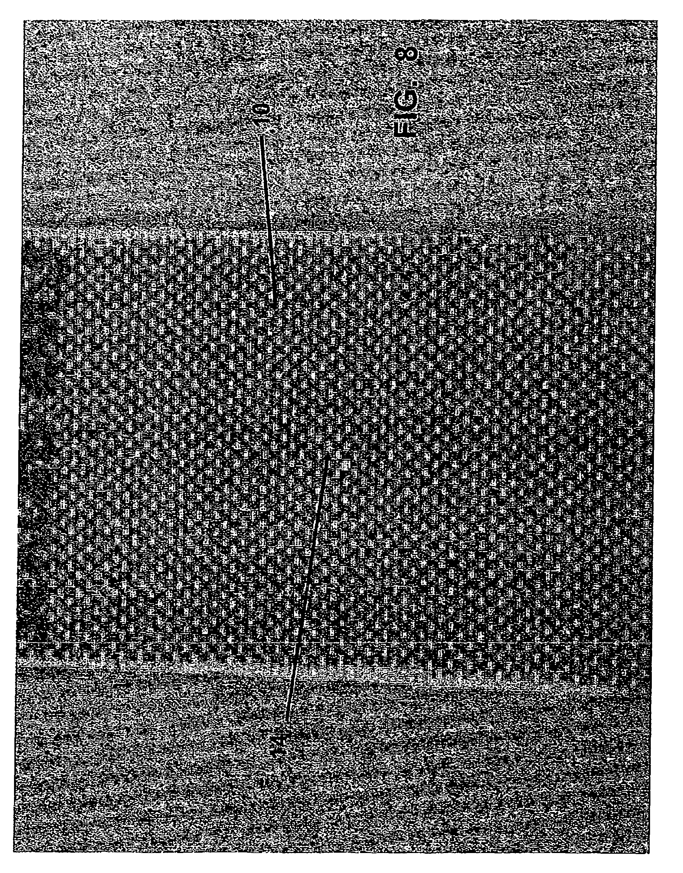

In Figures 5, 6, 7 and 8 are shown photographs illustrating similar results but with 'closed' hollow fibres, which is to say hollow fibres that are sealed at each end. Again, in Figure 5, as can be seen, a woven hollow fibre panel 10 was used, comprising strata of interwoven hollow fibres similar to those from which the structure shown in Figures 1 to 4 was formed. In this case though, fluid was introduced into all of the fibres and the open ends of the fibres were then sealed. A similar operation to that described with reference to Figures 1 to 4 was then performed and the results observed. In Figure 6, the act of severing or damaging some of the fibres is shown; the screwdriver blade was then immediately withdrawn and in Figure 7, the result can again be seen. No fluid was seen to issue from the fibres at any time. As with the example illustrated in Figures 1 to 4, the panel was left for a period of approximately ten minutes and then a further photograph was taken, shown in Figure 8, indicating that there was no change from what was observed immediately after severance of the fibres.

Having observed the results obtained, the experiments were repeated with both types of webs, but with an epoxy resin composition and thereafter with a cyanoacrylate resin composition filling the hollow fibres, each composition being coloured with an appropriate dyestuff. In neither case was any result achieved which was different from those shown in Figures 1 to 8.

Thus, as a means of effecting repairs in structures such as any part of an aircraft, where rapid repair of any defect is critical, it must be considered that implementation of the suggested solutions proposed by the disclosure of Dry cannot be relied upon. It is essential, where there is a very high possibility of failure that may lead to life threatening situations, that any such risk is minimised. It is essential, in contemplating self-repair systems for aircraft, for example, that there can be no risk of failure and that 100% reliability must be ensured.

Accordingly, while Dry can be regarded as disclosing the general principles of use of vessels to place 'modifying' agents in situ, it contains no guidance whatever as to the manner of such use or the parameters surrounding such use, except that, in relation to one embodiment only using a sealed fibre, it specifies external diameters up to 100 microns. In all other embodiments, vessels are of unspecified size and so may include pipes as well as fibres, capillaries, pipettes, tubes and the like. Similarly, proportions and quantities of so-called agents are entirely missing from the disclosure of Dry as are such enabling information such as viscosity, temperature and other parameters, which can be critical. I.

Dry's work has been extensively reported in "Alteration of matrix permeability, pore and crack structure by the time release of internal chemicals" -(published in Proc. Advances in Cementitious Materials, American Ceramic Society, Gaithersbury, Maryland, USA, 1990 pp729-768).
*"Smart materials which sense, active and repair damage; hollow porous fibers in composites release chemicals from fibers for self-healing, damage prevention, and*/*or dynamic control"-* (Paper presented at the 1^{st} European Conf. on smart structures and materials, Glasgow 1992,367, Session 11). The paper reported the use of coated hollow porous fibreglass and polypropylene fibres and repair of fibres using those techniques. Repair involved :-
1. Healing through fibre dimension changing when stretched thus forcing out fillers.
2. Fibre coating stripping due to tensile loads.
3. Hollow fibre breakage thus releasing chemicals.
The purpose of the fibres was to disgorge materials that would prevent corrosion.
*"*Smart Materials for sensing and or remedial action to reduce damage to materials" - (Proceedings ADPA/AIAA/ASME/SPIE conference on active materials and adaptive structures-session 11, 1992, 191-4).
This paper discussed the use of wax coating over porous fibres. To release the contents of the fibres i.e. fillers, the fibres are heated to melt the wax.
*"*Passive smart materials for sensing and actuation" - (Journal of Intelligent Materials Systems and Structures, 1993, 4, Jul, 420-425). This paper speculated on replenishment of fillers using vacuum pumps to draw chemicals through porous fibres, which then leach out of the porous wall when vacuum was switched off. The paper also mentions use of gravity feed of anticorrosion materials through hollow fibres into the matrix surrounding the corrosion site, and "electricity to drive ionic chemicals from hollow metal fibres into the matrix".
*"*Smart multiphase composite materials which repair themselves by a release of liquids which become solids" - (SPIE, 2189, 1994, 63-70) (SPIE is 'Society of Photo-optical Instrumentation Engineers'). The paper discusses use of cement prisms with metal reinforcing fibres and glass pipettes containing repair medium and dye. Fibre rebonding is as per SPIE 1916/439, 1996 referred to below.
*"*Matrix cracking repair and filling using active and passive modes for smart timed release of chemical from fibers into cement matrices" - (Smart Materials and Structures 3(1994)118-123). The disclosure is as J.Intell, Mats.Systems and Structures, 4, 420, 1993 referred to above. In the procedure described, for repairing cracks in cement structures, a wax coating enclosing porous fibres is melted and methylmethacrylate (MMA) is released, and then polymerised by heat. Vacuum was used to pull the MMA through hollow fibres, and then it was reported that release of vacuum allowed the repair agent to bleed through the fibre wall pores.
*"*Adhesive liquid core optical fibers for crack detection and repairs in polymer and concrete matrices" - (SPIE-vol-244, 410-413,1995). This paper reported investigation into the use of liquid core fibres for light transmission for the purpose of detection of faults and self-repair actually using capillaries and tubes though these are reported as fibres. Dry used a "glass fibre tube" with liquid adhesives and a laser source at one end with a diode at the other end to measure light transmission. It was reported that, with "large non-capillary type fibres" the liquid sitting in the bottom part of the vessel transmits brighter light than the air filled portion.
*"*Three-part methylmethacrylate adhesive system as an internal delivery system for smart responsive concrete" - (Smart Materials and Structures, 5 (1996) 297-300). In the reported work, a 3 part methylmethacrylate (MMA:Cumine Hydroperoxide:Co Neodecanoate-100:4:2) was used which is asserted as being more stable than other materials. A Co/MMA mix and the peroxide were used to fill (separate) cylindrical voids in the concrete. The cylinder wall surfaces were coated with water seal, and, when stressed, the sealant would crack allowing the fillers to leak out
*"*Passive smart self-repair in polymer matrix composite materials" - (SPIE, 1916, 438-444, 1993)
Two passive "time release" designs were reported, namely :-
a. tensile or flexural loads breaking the hollow fibre causing it to release the repair chemical;
b. tensile loading causing de-bonding of the repair fibre from its coating. Dry used a single hollow glass vessel in a matrix material. However, it is to be emphasised that the reported test was a passive test which is to say that any seepage of material from a fibre, which is believed to have been a self-contained fibre of very short length, embedded within the matrix material, would have been without exerting any external influence other than as applied by any physical change in the matrix itself.
*"*Procedures developed for self-repair of polymer matrix composite materials" - (Composite Structures 35 (1996) 263-269). A single repair fibre was embedded in a polymer matrix to assess the release of the repair chemical. The paper then discusses pipettes which are vacuum filled with 2-part epoxies in a resin system for *impact* tests. *Bend* tests were performed on cyanoacrylate filled glass pipettes to limit crack growth. Dry appears to make no distinction between pipettes and fibres.
*"*A novel method to detect crack location and volume in opaque and semi-opaque brittle materials" - (Smart Materials and Structures, 6, (1997) 35-39). The fibres are capillaries of 0.8 mm (i.e. 800µm) internal diameter. However, Dry does not confirm if the fibres are actually embedded in the matrix itself.

In addition to the work by Dry, other workers have reported investigations in the field of self-repair.

Li et al. have reported in "Feasibility study of a passive smart self-healing cementitious composite" (Composites Part B 29B (1998) 819-827), on the subject of using cyanoacrylates in fibres embedded in a cementitious matrix. Two types of "fibres" were used, namely, custom made fibres of 500 micron diameter (60 micron wall thickness) and commercial fibres used for medical applications (blood sampling micropipettes).

Zako et al. have reported in "Intelligent material systems using epoxy particles to repair microcracks and delamination damage in GFRP" (J.Intell, Mats.Systems and Structures, 10,863,1999) the use of thermoplastic epoxy particles embedded in a cold-setting epoxy matrix to heat up the material to effect flow of the thermoplastic repair material to heal damage,

Motoku et al. have reported in "Parametric studies on self-repairing approaches for resin infused composites subjected to low velocity impact" (Smart Materials and Structures, 8 (1999) 623-638) the use of woven S2 glass fabric based composites with hollow fibres for self-repair. Glass, copper and aluminium tubes were used as the repair "fibres". Diameters of 1-1.6 mm were used and only the glass tubes were successful in the self-repair.

Kessler and White have reported in "Self-activated healing of delamination damage in woven composites" (Composites Part A, 32 (2001)683-699) investigation of self-healing in woven composites. The approach here was the use of monomer in microcapsules dispersed throughout the resin matrix. The concept is that damage ruptures the capsules and monomer (dicyclopentadiene) flows out and polymerises on contact with a ruthenium-based catalyst (Grubb's catalyst) also dispersed within the matrix material.

Bleay et al. reported in "A smart repair system for polymer matrix composites" (Composites A 32 (2001) 1767 - 1776) the use of hollow glass fibres of S2 Hollex material and ACG resin-24 ply [0,90] and [+/-45,0,90] to form a 6.5 mm thick laminate. The Hollex fibres were hollow having an internal diameter of 5 microns. Bleay reported having successfully filled the fibres using vacuum assistance. Fillers used included 2-part adhesives (epoxies). An 80J impact was then applied; treatments to draw out the resin and hardener were used. The treatments were applied for 1 hr @ 60C, namely application of a vacuum around the impact site, heating to 60C, then further application of the vacuum. Bleay apparently reported that, at room temperature, filling fibres with all resins was unsuccessful, at lower temperature (3C) treatment was unsuccessful and that use of both a 2 part epoxy (LY5120) and a lower viscosity 2 part epoxy (MY750) were both unsuccessful. When the ambient temperature was increased to 60C to reduce viscosity, only a very slight uptake of resins in fibres was observed. With addition of acetone to 40% wt some success was achieved where both hardener and accelerator were diluted.

Pang et al. reported in "'Bleeding Composites'-Damage detection and self-repair using a biomimetic approach" (Composites Science and Technology (2002). (In Press)) use of 60 micron dia. hollow glass fibres (50% hollow fraction) in an epoxy matrix, along with conventional (solid) E-glass fibres. Uncured resin and hardener and UV dye were used in the hollow fibres and the repair agents were diluted with acetone. Resin film infusion was employed to produce prepreg of 62% Vf. The solid fibres are commercial 12 micron diameter fibres. The fibres were filled through vacuum infiltration after diamond saw cutting and ultrasonic cleaning with water, and the fibre ends were sealed by manually inserting epoxy putty into the fibre ends. After impact damage, the samples were allowed to "heal" for 24hrs at ambient temperature. Such mechanical data as can be gleaned shows that storage time affects the healing efficacy though the authors state that this may be due to bleeding not happening due to use of acetone-resin mix. It is noted that modified resins were being used possibly to reduce the viscosity of the resinous material.

In consequence of the apparent inability of existing proposals to satisfy the requirements of the applicants for rapid, failsafe systems that can be relied upon and which exhibit very little risk of failure, the applicants, who are particularly, but not exclusively, concerned with failsafe self-repair solutions such as are required with high performance aircraft have carried out independent research to address the particular requirements that accompany such solutions in the environment of aeronautical engineering.

In the construction of modern high performance aircraft in particular, though not exclusively, aircraft skin panels are being developed and used that are formed from fibre materials that are embedded in a resin matrix. The use of such materials provides panels that, according to the fibres chosen, provide lightweight structures that can impart a number of properties and characteristics to the resultant aircraft.

Being formed predominantly of fibres and being subject to the same stresses and strains as like structures formed of more conventional materials such as metals, metal alloys and the like, there is the ever present possibility that a fibre based structure may crack or be fractured or damaged due to impact by, in the case of an aircraft, an airborne object such as a bird in flight. Damage to a wing panel of an aircraft may be superficial or may be more deeply embedded within that panel, and may develop more severely before it is observed. This is particularly true of the possibility of delamination.

It is therefore an object of the present invention to provide a significantly more reliable approach to self-repair of structures that are predominantly fibre based.

The present invention provides in one aspect a structure comprising a body which is at least partially formed of hollow fibres which are assembled in a rigid matrix, the fibres comprising a plurality of sets of fibres arranged in groups of arrays of fibres, each of which comprises hollow fibres each at least partially containing a first, pressurised, fluid, part of a two-part curable resinous composition, a second part of the two-part resinous composition being provided around said each hollow fibre containing said first, pressurised, fluid, part, whereby, in the event of a fracture occurring to an array of fibres, the two parts of the composition can combine in the region of the fracture to cure the adhesive composition and thereby close the fracture.

The fibres may be assembled in a woven, knitted, plaited, braided or stitched arrangement to form said composite body. With such an arrangement, the fibres can provide material that can be used for many different purposes where rapid self-repair would not only be desirable but provide essential safety in use. An example of where such material would be useful is in the manufacture of parachutes.

In another structure according to the present invention, the plurality of hollow fibres can be assembled to form a composite body in which the fibres are at least partially embedded and bonded together in a matrix, preferably of resin material. The body is formed by laying the hollow fibres in one or more parallel arrays in the matrix of resin material.

Such structures in which fibres are embedded in resin material have rigidity and strength suited to production of vehicle body panels such as may be used in the manufacture of aircraft, ground vehicles and waterborne craft.

The present invention also provides in another aspect, a structure comprising a body which is at least partially formed of hollow fibres which are assembled in a rigid matrix, the fibres comprising a plurality of groups of arrays of fibres, each of which comprises fibres which have uncured resinous material therein as part of a fluid two-part curable resinous composition, each fibre having thereon a coating of a curing agent of the two-part resinous composition, whereby, in the event of a fracture occurring to an array of fibres, the two parts of the composition can combine in the region of the fracture to close the fracture, said part of the two-part composition being maintained under pressure within its respective fibre so that, at the point of fracture, combination of the two parts occurs at the point of fracture to permit curing of the composition and sealing of the fracture.

The present invention further provides in another aspect, a structure comprising a body which is at least partially formed of hollow fibres which are assembled in a rigid matrix, the fibres comprising a plurality of groups of arrays of fibres, each of which comprises fibres which have uncured resinous material therein as a first part of a fluid two-part curable resinous composition, each fibre having thereon a coating of a curing agent of the two-part resinous composition, the structure further comprising means for exerting pressure on the first part of the composition within each fibre whereby, in the event of a fracture occurring to an array of fibres the first part of the composition can be urged under pressure from the fibre(s) at the point of fracture so that the two parts of the composition can combine and cure in the region of the fracture to close the fracture.

In an example useful for understanding the present invention, there is provided a structure comprising a plurality of hollow fibres which are assembled to form a composite body, the fibres being arranged in pairs one fibre of each pair containing uncured resinous material as part of a fluid two-part curable resinous composition and the other of which comprises a curing agent of the two-part resinous composition, whereby, in the event of damage occurring to an array of fibres, the two parts of the composition can combine in the region of the damage to close the damage, each part of the two-part composition being maintained under pressure within its respective fibre so that, at the point of damage, combination of the two parts occurs at the point of damage to permit curing of the composition and sealing of the damage.

Such a composition as may be used with the present invention can be an aerobically curable composition or an anaerobically curable composition depending upon the function of the structure and where, within the structure, fibres carrying the fluid are located. Where, for example, the fluid is carried in fibres close to the exterior of the structure, the adhesive composition is ideally an aerobically curable composition whereas, if the fibre lays deep within such a structure, and is not exposed freely to atmosphere, then an anaerobically curable composition is more advantageous. However, whereas with an aerobic composition, presence of ambient air, or oxygen, is essential for curing, anaerobic compositions can also be used close to the surface of a structure according to the invention.

Suitable aerobic compositions that we have studied are
2 part epoxy resins such as those commercially available under the trade names Caldofix®, SpeciFix-40®, and EpoFix®);
two-part low viscosity epoxy resins such as those commercially available from 3M® under the trade names ScotchWeld Epoxy Adhesive Series, Types: DP100 DP105 DP110 DP125 DP190 DP270 DP420 DP460 DP805; two-part low viscosity acrylic resins available from 3M^{®} under the trade names ScotchWeld Epoxy Acrylic Adhesive Series DP810 DP820;
2 part polyester such as is commercially available under the trade name Serifix;
2 part polyurethane foam e.g. Part 1-UK-H-2051 Elastopor and, Part 2-Lupranat M20S Isocyanate; manufactured by BASF;
polyester foams prepared by reaction of a polyol (e.g. diols and triols) and ε-caprolactone (or methyl- e-caprolactones) in which ring-opening of the lactone moiety is effected by catalysts (e.g. tin (octanoate; proprietary ring-opening catalysts including the Schiff base/titanium complexes available from Johnson Matthey Catalysts UK. The catalyst can be present in either the alcohol moiety, the lactone moiety, or both. It might also be present in a separate fibre;
Purseal or Purflex (isocyanate precursor from Scott Vickers) in one fibre, the catalyst (PurcatF2) in a second fibre. Water is contained in a third fibre. On mixing of the three a polyurethane foam forms.

Of the range of anaerobic adhesive compositions, we selected
2 part epoxy (e.g. Struers Caldofix®, Specific-40®, and EpoFix®);
3M® two-part low viscosity epoxy resins (3M® ScotchWeld Epoxy Adhesive Series, Types: DP100 DP105 DP110 DP125 DP190 DP270 DP420 DP460 DP805);
3M® two-part low viscosity acrylic resins (3M^{®} ScotchWeld Epoxy Acrylic Adhesive Series DP810 DP820);
2 part polyester (e.g. Struers Serifix);
2 part polyurethane foam (e.g. Part 1-UK-H-2051 Elastopor and, Part 2-Lupranat M20S Isocyanate; manufactured by BASF);
polyester foams prepared by reaction of a polyol (e.g. diols and triols) and ε-caprolactone (or methyl- ε-caprolactones) in which ring-opening of the lactone moiety is effected by titanium catalysts. The catalyst can be present in either the alcohol moiety, the lactone moiety, or both. It might also be present in a separate fibre;
Purseal or Purflex (isocyanate precursor from Scott Vickers) in one fibre, the catalyst (PurcatF2) in a second fibre. Water is contained in a third fibre. On mixing of the three polyurethane foam forms.

The composition itself can be in the form of a paste or in a more liquid form in which it can more readily and freely flow within the fibres.

In paste form, any of the above compositions can be deployed, wherein particulate matter is dispersed in one or both parts of the resin/polymer moiety. Particulate matter includes fine particulate matter (organic and/or inorganic) such as carbon nano-powder and nanotubes, fine carbon fibre and nanofibre, nano silica powder and fibre. Fluorescent inorganic chalcogenide fillers such as zinc sulphide, zinc telluride, cadmium sulphide and cadmium telluride including the same with a protective coating of silica (that improves their stability in a humid environment)

Some compositions are available in liquid form. Examples of these are 2 part epoxy resins (e.g. Struers Caldofix®, SpeciFix-40®, and EpoFix®);
3M® two-part low viscosity epoxy resins (3M^{®} ScotchWeld Epoxy Adhesive Series, Types: DP100 DP105 DP110 DP125 DP190 DP270 DP420 DP460 DP805):
3M® two-part low viscosity acrylic resins (3M^{®} ScotchWeld Epoxy Acrylic Adhesive Series DP810 DP820);
2 part polyester (e.g. Struers Serifix);
2 part polyurethane foam (e.g. Part 1-UK-H-2051 Elastopor and, Part 2-Lupranat M20S Isocyanate; manufactured by BASF);
polyester foams prepared by reaction of a polyol (e.g. diols and triols) and ε-caprolactone (or methyl- ε-caprolactones) in which ring-opening of the lactone moiety is effected by titanium catalysts. (The catalyst can be present in either the alcohol moiety, the lactone moiety, or both. It might also be present in a separate near-neighbouring fibre.)
Purseal or Purflex (isocyanate precursor from Scott Vickers) in one fibre, the catalyst (PurcatF2) in a second fibre. Water is contained in a third fibre. On mixing of the three, a polyurethane foam forms.

The ability of the fluid composition to flow into and from the fibres is determined by the internal diameter of the fibres, by the viscosity of the fluid introduced into the fibres, the 'wetness' of the fluid, the temperature of the fluid and the pressure applied. With fibres of an internal diameter falling within the range of between 2 microns and 20 microns such as is typical of fibres used with the present invention, the viscosity, temperature and pressure values are critical. If the viscosity value falls below a value of approximately 1 N s m⁻² (1000cP), then fluid will not flow without an excessive pressure that can itself lead to rupture of the fibre through which the fluid flows. In a structure such as may be required in an aircraft wings or fuselage, these criteria are critical and if not correctly assessed, can be life threatening. The compositions must be selected so that they can be releasable under pressure at altitudes exceeding 15,000 metres at which both external pressure and temperature are both exceedingly low.

The viscosity of the fluid adhesive composition is preferably less than about 1 N s m⁻² (1000cP) for ease of filling reasons. Ideally, less than 0.25 N s m⁻² (250cP). Fluid compositions that can be used in a structure according to the present invention ideally have viscosities which are very much lower. For example, TONE™ ECEQ (epsilon caprolactone) has a viscosity of 0.013 N s m⁻² (13.8cP) at 20°C while another suitable resin, Purseal MDI-based isocyanate (from Scott Vickers), has a viscosity of 0.10 N s m⁻² (100cP) at 20°C. while the catalyst therefor has a viscosity of 0.02 N s m⁻² (20cP) at 20°C.

With fibres having an internal diameter of between 5µm and 10µm, the preferred viscosity range is ideally less than 0.25 N s m⁻² (250cP) and preferably below about 0.10 N s m⁻² (100cP). Some suitable resins that we have deployed are TONE™ ECEQ (epsilon caprolactone) which has a viscosity of 0.013 N s m⁻² (13.8cP) at 20C, and Purseal MDI-based isocyanate (from Scott Vickers) which has a viscosity of 0.10 N s m⁻² (100cP) at 20°C while its catalyst has a viscosity of 0.02 N s m⁻² (20cP) at 20°C.

Structures suitable for constructing aircraft wings and fuselage are ideally to be constructed from embedded fibres having an external diameter in the range of about 10 microns to about 12 microns, and an internal diameter in the range of about 5 to about 7 microns. If the fibres have internal and external diameters that are a magnitude larger, then, in a structure such as is contemplated by the present invention, larger fibres may affect the structural integrity and strength of the wing or fuselage panel.

Thus the selection of materials that can be used both for the fibres themselves and for the fluid adhesive compositions that they carry is extremely important.

The fibres themselves must be of a brittle nature, which is to say made from a material that has mechanical properties to withstand the pressure of fluid pumped into the fibres but which will break under impact such as may be experienced during flight or when an extraordinary strain or stress is placed upon it. We have found that fibres made from glass are most suitable, though examples of other materials that can be used are hollow carbon fibre material and hollow diamond fibre material, as well as polymeric materials such as polyesters (terephthalates), polyamides (nylons) and polyenes (polyethylene, polypropylene) provided that they have the strength and degree of brittleness required of such structures. If required, chosen polymeric materials can be reinforced by the provision of, for example, carbon nanofibre material or the like. Where solid fibres are deployed within the resin matrix, these too may be formed of glass. Other suitable solid fibre material may include carbon fibre material and polymeric materials such as polyamides, polyimides, polyesters, co-polymers and block co-polymers (subject to the same proviso as for hollow fibres made therefrom), E-glass, S-glass, diamond fibre and IR transmissive glass.

It will be readily understood that any component of the adhesive composition which is transported by a fibre can be carried by a volatile carrier adapted to evaporate at a point of fracture in a fibre. It is of course essential that the volatile carrier, which may itself be a solvent for the component, should have a very high rate of evaporation and that it should not in any way interfere with the chemical reaction that takes place between the components of the adhesive composition.

Volatile carrier can be added to either part or both of any of the aforementioned (and re-listed below) two part systems. Choice of solvent is determined largely by the chemistry of the reagent systems. Proprietary brands of 2-part polyurethane systems often do contain volatile additives. Examples of volatile carriers that we have considered are
low molecular weight alkenes (e.g. propene, or butene, pentene and isomers and homologues) and their fluorinated and perfluorinated analogues and homologues (e.g.3,3,3-trifluoropropene) and fluorinated and perfluorinated aromatic compounds (e.g. hexafluorobenzene);
volatile ethers or alkanes or alkenes and fluorinated analogues of these types which are suitable for mixing with either or both parts of a two-part polyurethane system;
volatile ethers or alkanes or alkenes and fluorinated analogues of these types are suitable for mixing with either or both parts of a two-part polyester system; and
volatile ethers or alkanes or alkenes and fluorinated analogues of these types are suitable for mixing with either or both parts of a two-part polyacrylic system.

The choice of carrier will be determined by its compatibility and miscibility with the adhesive composition.

The requirement of a high evaporation rate is of course essential for repair of aircraft structures where it is essential that both evaporation and subsequent curing of any fracture which may lead to a larger crack if not rapidly sealed.

Thus the selection of materials that can be used both for the fibres themselves and for the fluid adhesive compositions that they carry is extremely important.

The fibres themselves must be of a brittle nature, which is to say made from a material that has the tensile strength to withstand the pressure of fluid pumped into the fibres but which will break under impact such as may be experienced during flight or when an extraordinary strain or stress is placed upon it. We have found that fibres made from glass are most suitable. Examples of other materials that can be used are hollow carbon fibre material and hollow diamond fibre material, as well as polymeric materials such as polyesters (terephthalates), polyamides (nylons) and polyenes (polyethylene, polypropylene). Where solid fibres are deployed within the resin bed, these too may be formed of glass. Carbon fibre material and polymeric materials such as polyamides, polyimides, polyesters, co-polymers and block co-polymers, E-glass, S-glass, diamond fibre and IR transmissive glass.

Mention was previously made of the fluid materials that can be used to provide the two-part adhesive compositions that are present in the fibres. Using two-part adhesive compositions such as epoxy resin compositions which comprise, as intermediates, bisphenol A and epichlorohydrin, a hardener (or cross-linking agent) is then admixed with the intermediate components, and, in a structure according to the present invention, these three components can be combined in various ways, though the over-riding criteria are that they be combined rapidly and in the correct proportions and cure rapidly at the prevailing temperature.

To this end, a single fibre can carry the intermediate components in admixture while an adjacent fibre can carry the cross-linking agent, the fibres themselves being of sufficient internal diameter as to allow the components to be released at any point of fracture of the fibres so that they are admixed in the correct proportions. The pressure maintained in the fibres can also be controlled and adjusted to the same end, that is to say that the delivery rate of the components to any point of fracture can be controlled to ensure proper proportionalising of the components. To this end also, the temperature of the components must also be controlled to ensure that the viscosity of the materials within the fibres and the ambient temperature for effecting sure of the components at the point of fracture can be correctly maintained.

As an alternative to transporting each of the components along the fibres, a further arrangement is one in which one of the components is provided as an external surface coating provided on the fibre that contains the other component. Thus in the case of an epoxy resin composition in which the intermediate components are provided within a fibre, the exterior of the fibre may be coated externally with the hardener or cross-linking agent. To prevent the hardener from reacting with the resin material of the resin matrix in which the fibres are embedded, the hardener may be entrained in a retardant which can screen the hardener for a sufficient period of time to permit the matrix itself to cure completely while itself dissipating over time to expose the hardener as a coating on the fibres which will then not be affected by the matrix in which the fibres are embedded.

Alternatively, a catalyst or hardener can be provided in encapsulated form and embedded in such a coating which is capable of separating in the event of a fracture of the fibre occurring so that the hardener is exposed to the material issuing from the fibre. An example of such a catalyst would be a Grubb's catalyst.

It will be readily understood that it is possible to reverse the position of the intermediate components and of the hardener so that the hardener is contained within the fibres while the admixed intermediate components are themselves provided as coatings on the outside of the fibres.

The requirement of a high evaporation rate is of course essential for repair of aircraft structures where it is essential that both evaporation and subsequent curing of any fracture which may lead to a larger crack if not rapidly sealed.

Where heat curable or thermoset adhesive compositions are deployed in the hollow fibres, it can be advantageous to provide additional heating to assist with accelerating curing of the composition. To this end, fibres adjacent the hollow fibres carrying the adhesive composition are hollow and have heating elements extending therethrough. The heating element can be provided by resistive wire heating elements such as copper, nickel, nickel-iron alloys, (e.g. NIFETHAL 70 AND NIFETHAL 52 from Kanthal Globar) silicon carbide wire (from Kanthal Globar), nickel coated carbon fibre (Thermion Systems) and carbon fibre. Alternatively to extending heating elements through adjacent hollow fibres, hot fluids can be passed through dedicated hollow fibre [e.g. water, light oils, ethylene glycol and silicone fluids]. As a further alternative source of heating, magnetic wire that can be inductively heated may be introduced into the hollow fibres preferably in the form of a coating on the interior surfaces of the fibre (e.g. iron wire , cobalt wire, nickel wire, alloys of same, and wires from other ferromagnetic materials). As a further alternative, hollow fibres can contain fluid that strongly absorbs microwaves and is thereby heated where the fluid deployed is tailored to absorb at frequency other than the surrounding matrix. Some adhesive compositions such as cyanoacrylate and epoxy resin compositions are inherently exothermic when they cure and do not need additional heat to effect the cure.

In order to maximise the functionality of a structure according to the present invention, instead of dedicating specific fibres to such functions as heating, the fibres that carry the adhesive composition or any catalysts or accelerator or the like provided therefor may be coated with an electrically resistive material whereby, when an electrical potential is applied thereto, the fibres can be heated. Suitable resistive materials such as copper, nickel, nickel-iron alloys, (e.g. NIFETHAL 70 AND NIFETHAL 52 from Kanthal Globar) silicon carbide (from Kanthal Globar), nickel coated carbon (Thermion Systems), carbon fibre and metallised carbon fibre can be used to provide such coating. The coating can be internal or external of the hollow fibre itself.

Where the coating is internal, it can be formed by vapour deposition, condensation, electroless plating, chemical reactions, polyol processes or other suitable techniques. The most suitable materials for internal coating are copper, silver, tin, cobalt, nickel, iron and alloys of these. The primary criterion of course for selecting the internal coating is that it has no interaction with or effect upon whatever adhesive composition is present in or deployed in the fibre itself.

Where the fibres are externally coated with the electrically resistive heating material, the primary criterion of such external coatings is that they do not weaken the integrity of the bond between the fibres and the resin bed in which they are embedded. The coating may therefore be provided by metallic coatings such as nickel, cobalt, copper, alloys of nickel, alloys of copper and cobalt/nickel alloys as well as by carbon coatings.

As an alternative to or in addition to these forms of heating, it is also possible to provide fibres adjacent the hollow fibres of the array as solid fibres formed of a material having an electrical resistance providing heating elements for heating the adhesive composition. Where this is deemed appropriate, the solid fibres are provided by, for example, resistive wire heating elements such as copper, nickel, nickel-iron alloys, (e.g. NIFETHAL 70 AND NIFETHAL 52 from Kanthal Globar) silicon carbide wire [from Kanthal Globar], nickel coated carbon fibre (Thermion Systems) and carbon fibre.

It will of course be clearly understood that all of these forms of heating can be deployed in combination and that they are not exclusive to each other.

An adhesive composition as used in a structure according to the present invention can be an ultraviolet or radiation curable composition where the array of hollow fibres is located at or adjacent an outer surface of its respective structure. Suitable compositions are UV curable epoxy resins, UV curable urethane resins, and, as referred to above, thiol-ene systems where crosslinking between the thiol and the ene compound occurs by exposure to UV radiation.

Where, for example, strongly exothermic compositions are deployed in the hollow fibres of an array, it is considered as a safety precaution to prevent localised overheating to provide a second array of hollow fibres closely associated with the first array for carrying coolant fluid alongside fires in which such an exothermic reaction may occur. Pure water is regarded as the optimum coolant since this has the highest known heat capacity of coolant fluids. However, where, as in an aircraft for example, particularly but not exclusively in a commercial aircraft, air conditioning systems are provided, then the second array of fibres can be coupled for injecting refrigerant fluids such as cooled glycol/water mixtures, cooled brine, cooled heat transfer fluids such as synthetic silicones (e.g. as supplied by Dow (DOWTHERM* SYLTHERM** DOWFROST* DOWCAL* UCARTHERM™.

The arrays of fibres of a structure according to the present invention can be arranged in layers at least substantially parallel to major surfaces of the structure or they can be arranged in many other ways, depending upon the function(s) that the structure performs. Where, for example, the structure is designed to provide camouflage capabilities, both visual and electromagnetically (for the avoidance of radar detection for example), those fibres which are associated with imparting such functionality are arrayed generally close to the surface of the structure. The arrays of fibres carrying the adhesive composition are then distributed throughout these layers to an extent that ensures that adhesive composition which is forced through the fibres in the event of fracture reaches the full extent of the fracture and closes it. To this end, the structure can be designed so that adhesive composition which is intended for use in such sectors or regions of the structure emulates characteristics of the materials carried by those fibres performing those other functions. Thus, for example, where fibres are intended for use in carrying fluids affecting the radar signature of the structure, then the adhesive composition which is delivered to that part of the structure can itself be imbued with similar properties so that, in the event of fracture, adhesive composition having like properties is used to seal and repair the fracture.

Clearly a structure according to the present invention would advantageously include sensor means for sensing any fracture in a fibre, the sensor means being provided by a further array of fibres interspersed with said first array of hollow fibres. To this end, electrically conductive fibre that undergoes resistance change on damage (either a change in resistance as a result of damage causing a change in cross-sectional area or partial fracture or an open circuit effect upon total fracture) can be deployed throughout the structure to detect any distortion, change of mechanical pressure in local environment or a fracture in the structure. The sensor means can include electrically conductive fibres which will be of silver, gold, copper, tin, or other highly conductive metals, or of carbon fibre, or internally metallised hollow fibre that may be used for resistive heating e.g. silver, copper, tin , nickel, cobalt, Ni/Co alloys). Quantum tunnelling elastomer (QTC) or piezoelectric materials (e.g. as coatings on fibres) or triboluminescent materials may also be used for the same purpose.

Individual ones of the fibres can be coated with electrically conductive material which can be elected from internally metallised hollow fibre of high electrical conductivity (silver or copper or tin), a QTC, and externally metallised hollow or solid fibre (silver, copper, tin, nickel, cobalt, alloys of cobalt/nickel, aluminium and many other metals). It is also foreseen by the present invention that photonic and light-guiding approaches can for example be used to sense the occurrence of a fracture.

At least one of the two parts of the adhesive composition can be coloured for identification purposes. Examples of suitable colouring agents are nano-particulate carbon materials such as buckyballs or carbon nanotubes or carbon nanofibre;
fluorescent and coloured nano-particulate compounds of the combination of Group IIb and Group Vlb elements such as zinc sulphide, zinc selenide, zinc telluride, cadmium sulphide, cadmium selenide, cadmium telluride, mercury selenide etc. and examples of these where the nanoparticles have coating of silica to improve stability to moisture;
organic and inorganic pigments commonly used in the paint and textile industries including coloured acrylic dyes (e.g. PDI 22-88032 low-viscosity black colorant available from 'Ferro');
liquid colourants such as SPECTRAFLO® (Ferro); and CHROMA-CHEM® acrylic colourants.

The two-part composition can itself also be selected from adhesive compositions that undergoes a colour change when curing. Alternatively, the hollow fibres can contain colour coding fluids under pressure to indicate different regions of the structure so that, in the event of a fracture occurring therein, the fluid can flow from the fibres and location of a fracture can be visually identified.

The curing agent can be provided in suspension in a carrier fluid using, for example, an amine hardener diluted with polar halosolvents such as trichloromethane, dichloromethane, mono chloro and poly chloro alkanes and alkenes; dimethylformamide; n-methylpyrrolidone; and/or an aromatic solvent such as toluene. Alternatively, the curing agent can be provided in encapsulated form, while the the uncured resinous material can be provided in suspension in a carrier fluid. Suitable carrier fluids are:-
amine hardeners diluted with polar halosolvents such as trichloromethane, dichloromethane, mono chloro and poly chloro alkanes and alkenes; dimethylformamide;
n-methylpyrrolidone; and
aromatic solvents such as toluene.

Furthermore, the uncured resinous material can itself be provided in encapsulated form.

The matrix of cured resin material in which the hollow fibres are embedded may itself comprise an accelerator, curing agent and/or catalyst for the two part composition contained within the hollow fibres provided that the accelerator/ curing agent/catalyst is not one that will interact with the matrix of cured resin. A dedicated Grubb's catalyst can fulfil such a function.

The present invention also provides an aircraft comprising an airframe, motive means mounted to the airframe for propelling the aircraft, and a fabricated skin enclosing the airframe, the fabricated skin being formed by a plurality of panels, each of which is provided by a structure according to the present invention.

In an example useful for understanding the present invention there is provided a method of repairing a fracture in a structure formed by a plurality of fibres embedded in a matrix, the plurality of fibres including one or more arrays of hollow fibres, the or each array comprising pairs of fibres, one fibre of each pair of which comprises uncured resinous material as part of a fluid two-part curable resinous composition and the other of which comprises a curing agent of the two-part resinous composition, whereby, in the event of a fracture occurring to an array of fibres, the two parts of the composition can combine in the region of the fracture to close the fracture, each part of the two-part composition being maintained under pressure within its respective fibre so that, at the point of fracture, combination of the two parts occurs at the point of fracture to permit curing of the composition, the method comprising the steps of filling said pairs of fibres with the first and second parts of the adhesive composition, and maintaining the two parts under pressure so that each part can be released at a point of fracture to permit said combination thereof and effect curing to seal such fracture while maintaining fluid flow through the fibre. We have found that the minimum pressure to be applied to fluid in a fibre to cause fluid to flow from the fibre at a point of fracture can be as little as a few thousand Pascals.

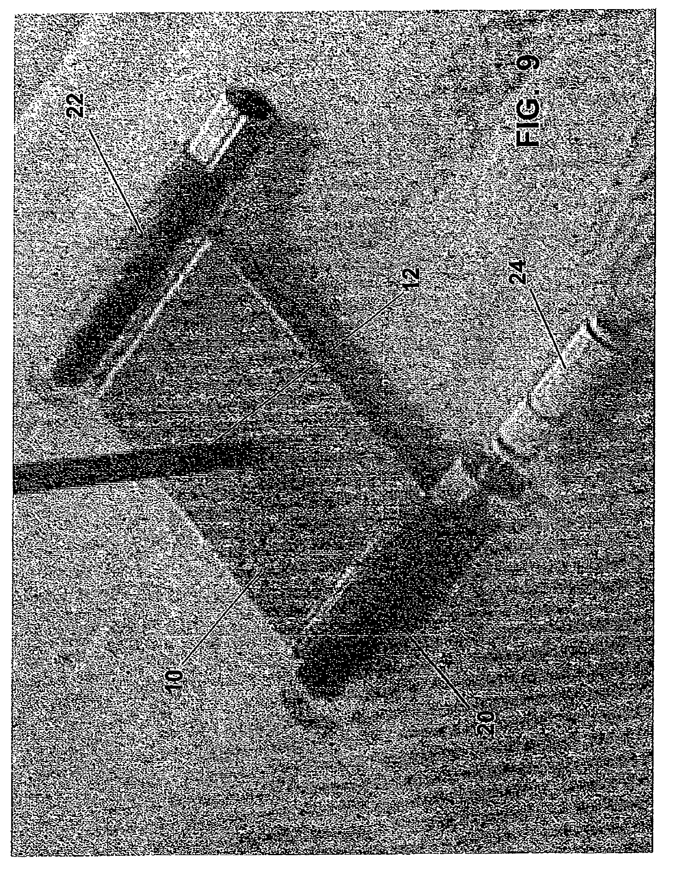

There now follows a detailed description, which is to be read with reference to Figures 9 to 21 of the accompanying drawings, of methods and structures according to the present invention which have been selected for description to illustrate the invention by way of example, though not by way of limitation.

Referring therefore to Figures 9 to 21:-
Figures 9 to 13 are photographic images illustrating an experimental structure according to the present invention;
Figures 14 and 15 are photographic images illustrating a further experimental structure according to the present invention;
Figure 16 is an end view of a part of a typical structure according to an example useful for understanding the present invention, showing various fibre constructs that can be used in a structure;
Figure 17 is a photographic enlarged end view of an experimental fibre arrangement comprising a cluster of more than 200 fibres within a structure such as is shown in Figure 7;
Figure 18 is a partly schematic diagram showing the manner in which fluid materials can be fed into and from fibres of a structure according to the present invention;
Figure 19 is a schematic illustration showing the manner in which an array of fibres deploying adhesive composition can be coupled to valve and pump arrangements for a structure according to the present invention; and
Figures 20 and 21 are axial cross-sectional views each of a single fibre such as may be used in a structure or method according to the present invention.

Referring firstly to Figures 9 to 13, it is to be understood that these images illustrate the fundamental principle underlying the present invention. This fundamental principle relies upon the use of pressure being applied both to fill fibres of a structure and to maintain that pressure on fluids in the fibres when the structure is deployed, whether as part of an aircraft fuselage or wing or in any other functional deployment. As explained below, pressure is advantageously applied via a pressurised supply of the fluid. In spite of all of the work that has been carried out and reported in this field, and which does not make any reference to the use of positive pressure, we have found that the presence of positive pressure is critical to ensuring and guaranteeing the successful deployment of effective fluid adhesive materials in hollow fibres such as are used in fibre-based composite bodies constructed predominantly from fibres within the size range contemplated by the present invention. Without the application of pressure, it is not possible to use, reliably and successfully, adhesive compositions of the consistency that will permit rapid curing of their components, due to variations in viscosity of those components when subject to the constraints of ambient conditions (lack of application of pressure also results in limitation of the size of any repair that can be made to the structure). In other words, when applied for example to the wing of an aircraft where a structure according to the present invention may be incorporated, changes in temperature due to variation in aititude of the aircraft can have a considerable effect on the viscosity of a fluid to an extent that it cannot be guaranteed to flow under those ambient conditions or at a sufficiently predictable rate that combination of fluids can be certain, without the application of pressure through the fibres.

To demonstrate this, we carried out experiments using a preformed woven fabric similar to that shown in Figures 1 to 8.

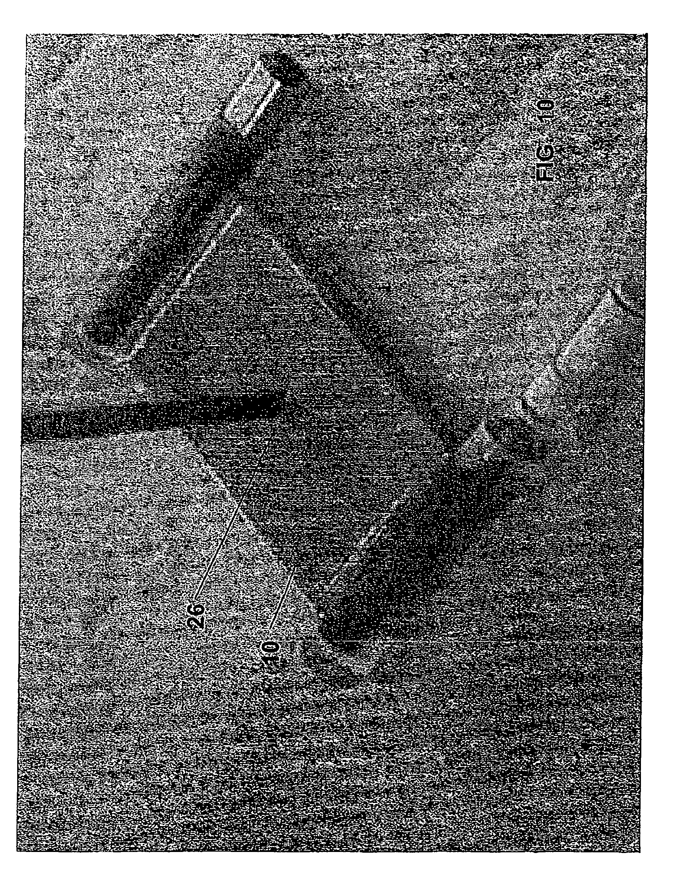

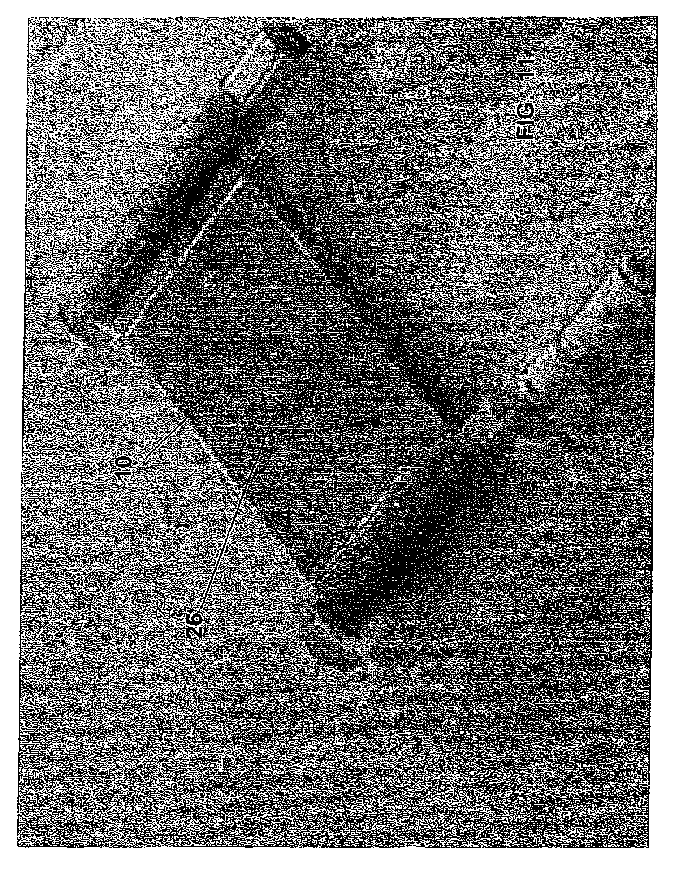

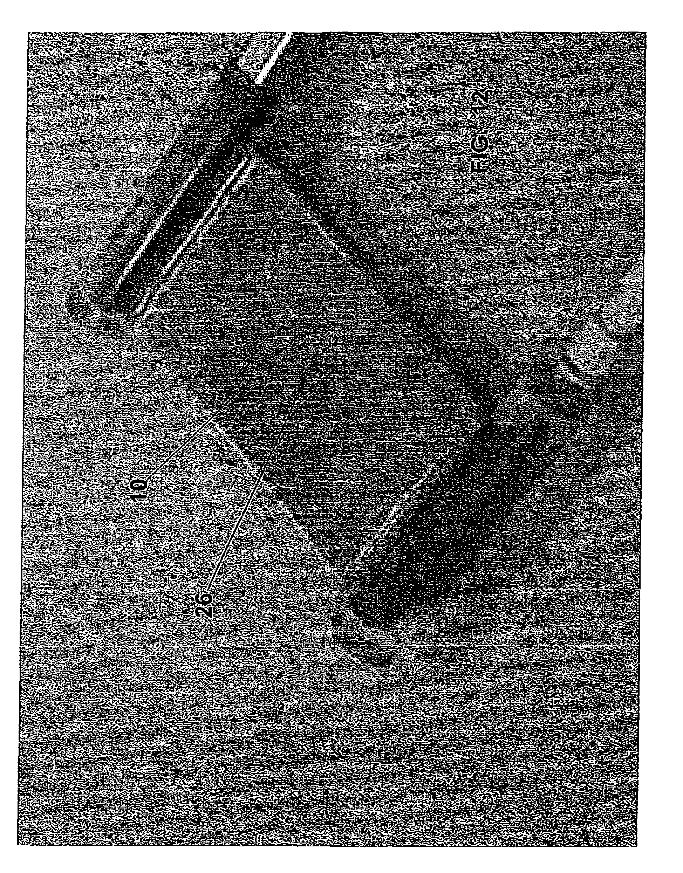

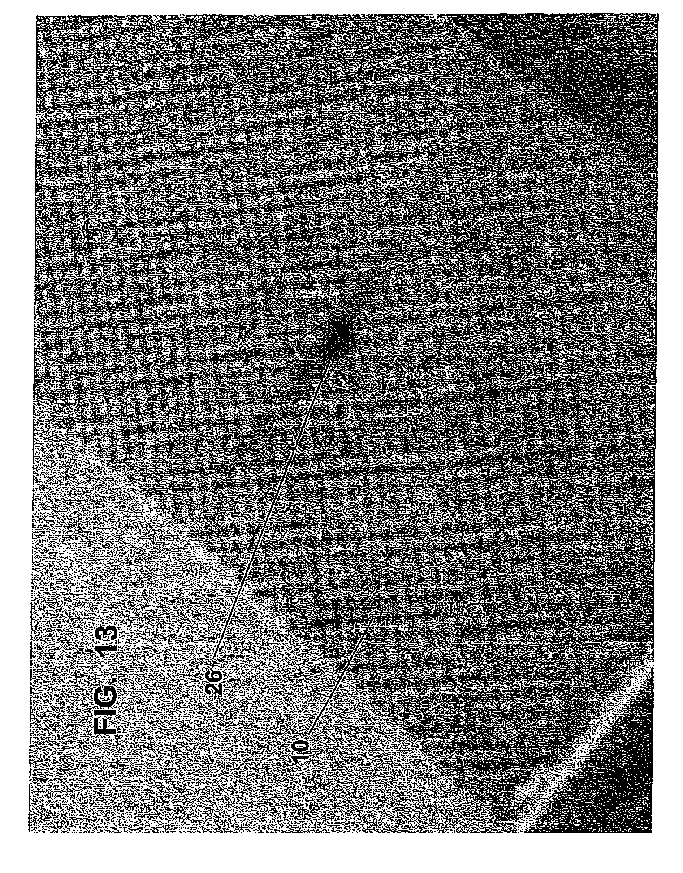

However, as compared with the two experiments discussed above, the woven panel 10 shown in Figures 9 to 13 is in all material respects similar to that shown in Figures 1 to 8 and is open ended at each end. However, in this case, the ends of the fibres were connected to a cylindrical chamber 20, 22 at each end with a piston 24 provided in the chamber 20 so that pressure could be exerted on fluid present in the chamber. The piston, or plunger, was arranged so that the pressure that could be exerted could be adjusted for experimental purposes. As before, the fibres were filled with purified water which included a colouring agent provided by a commercial food dye which was the same as that used in the tests that were carried out and described with reference to Figures 1 to 8. As with the experiments conducted with un-pressurised arrangements, as discussed with reference to Figures 1 to 8, a screwdriver tip was used to break the fibres of the panel, as shown in Figure 9, while pressure was exerted simply by finger pressure via the piston 24. The tip of the screwdriver was immediately removed from the panel 10 leaving a rupture 26 in the panel where the fibres were fractured, as shown in Figure 10. After less than one second, it was observed that fluid was leaking from the ruptured fibres as shown in Figure 11. After a further period of approximately 0.5 seconds it was observed that the leaking fluid had spread along the entire length of the cut made by the screwdriver tip as shown in Figure 12, and thereafter, within two seconds of having been punctured by the screwdriver tip, a bead of material had formed on the surface of the panel as shown in Figure 13.

Further experiments were then carried out using a similar panel to that shown in Figures 9 to 13 but with a two-part epoxy resin composition and thereafter with a two-part cyanoacrylate resin composition filling the hollow fibres, each composition again being coloured with an appropriate dyestuff. In each case, a like result was achieved to that shown in Figures 9 to 13.

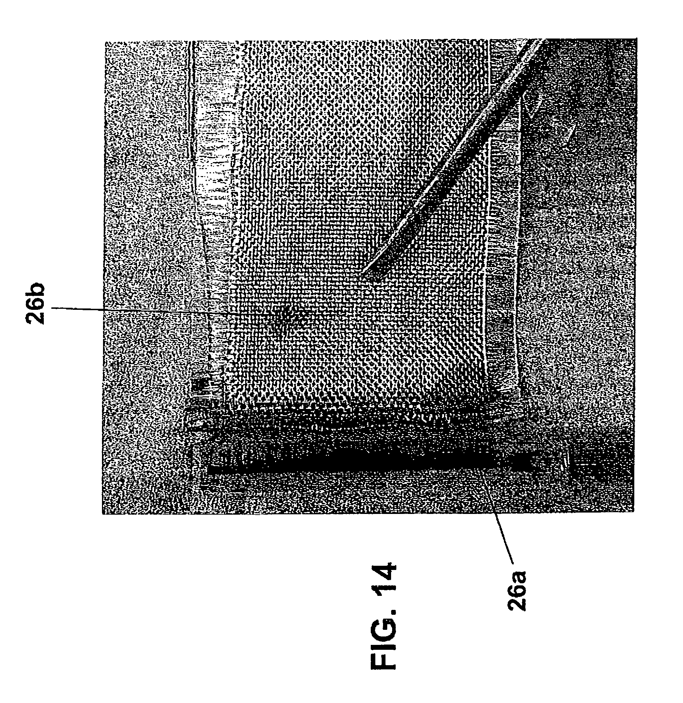

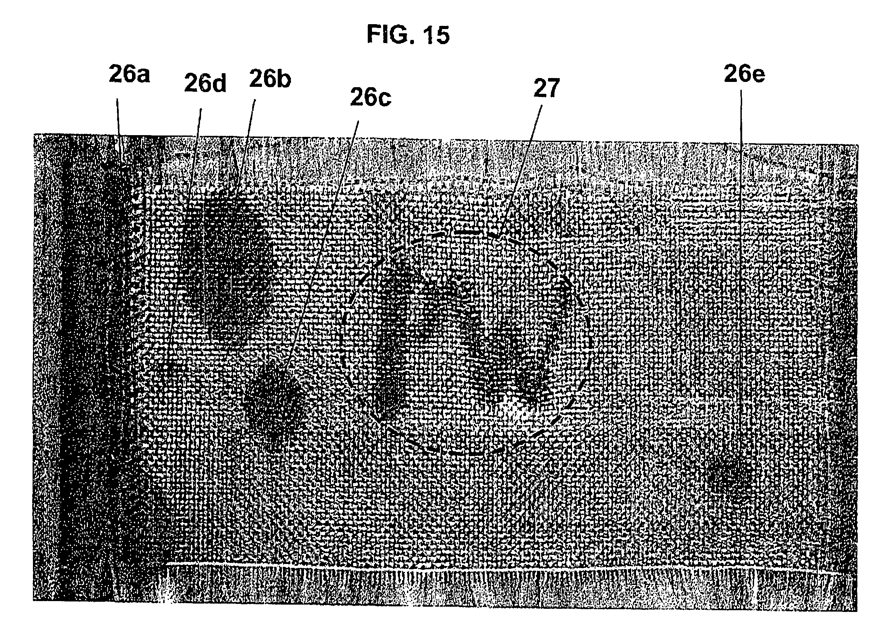

In Figures 14 and 15, are shown two stages in a further experiment carried out to establish proof of concept.

A second web, similar to that shown in Figures 9 to 13 was treated in a similar manner to the web of Figures 9 to 13. However, this panel was punctured in several places, and not just once as shown in the preceding Figures. Each of the locations at which the web fibres were fractured by a screwdriver blade is designated at 26.

In Figure 14, two initial incisions at 26a and 26b were made which were spaced apart in the direction of the weft fibres, i.e. transversely across the width of the panel, and as can be seen from Figure 14, the pressurised fluid in the fibres, which was the same as was used in each of the initial experiments described with reference to Figures 1 to 13, leaked from the points of fracture as was observed in the experiment illustrated in Figures 9 to 13.

The fibres were then fractured in rapid succession at 26c, 26d and 26e, and fibres were severed by the tip of the screwdriver to scribe the letters 'P' and 'W' on the web as shown at 27.

In each case, the coloured fluid issued from the locations at which the fibres had been fractured. What is to be noted however is that although individual incisions have been made 'upstream', this does not affect the fact that fluid also issues from the same fibres downstream of the initial fractures, thereby demonstrating that a structure according to the present invention has the ability to continue to function.

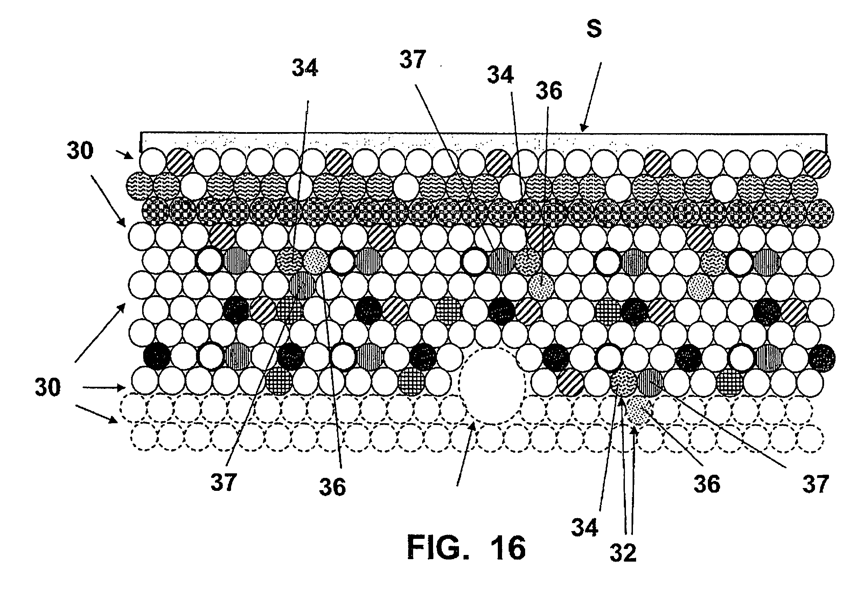

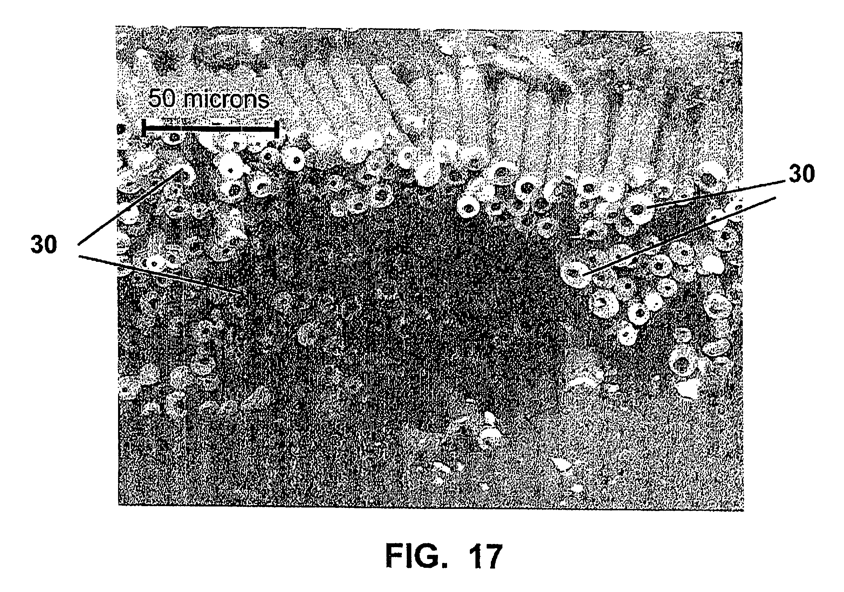

In Figure 16, the structure shown therein can be seen to comprise a plurality of hollow fibres arranged in strata or layers 30. The fibres themselves are predominantly each of an external diameter in the range of 10 µm to 20 µm except where otherwise specified, and have an internal diameter of between 2 µm and 16 µm, depending upon the wall thickness of the fibre. As shown in Figure 10 which is a photographic image of an experimental arrangement of such fibres embedded in and held in position by epoxy resin to form a composite body of embedded fibres which, as can be deduced from the Figure are of external diameter in the range of approximately 10 µm to 12 µm. As can also be seen from Figure 17, the majority of the fibres are hollow fibres having an internal diameter in the range of 5 µm to 7 µm. The fibres used experimentally can be of varying internal and external dimensions, and it will be readily appreciated that in production of commercial structures according to the present invention, control over both internal and external diameters would be exercised to ensure greater uniformity where required. However, it must also be appreciated that, as discussed below, it is not always appropriate for all of the fibres to be of uniform internal and external dimensions.

The hollow fibres of a structure such as is shown in Figures 16 and 17 are formed of glass which may be reinforced. Other materials may also be used for forming the fibres provided that they permit a strong bond with the surrounding resin. In addition to keying to the resin, the resin itself and perhaps the fibres must also have a degree of brittleness that allows them to fracture under any stress, strain or impact such as may be encountered when used in their intended environment. Thus, where such a structure is employed in the skin of an aircraft, the structure itself may flex in flight, especially where the structure forms a wing panel, and the fibre structure must allow for such flexure without cracking or fracturing within a predetermined timespan. However, where such a structure is, for example, subject to impact, then, when such impact leads to damage, the structure must be capable of responding to that damage at the point of impact.

Figure 16 shows an example useful for understanding the invention in which a structure comprises fibres associated with different functions required of the structure, including camouflage, as disclosed in our co-pending UK patent application no.. Among those fibres, and evenly distributed throughout the structure are arrays of pairs of fibres for deployment of two-part adhesive composition(s), in addition to, or as an alternative to, the use of any other functionality. Such pairs of fibres are indicated at 32, one fibre 34 of each pair of which contains or carries uncured resinous material as part of a two-part curable resinous composition and the other 36 of which comprises a curing agent of the two-part resinous composition, so that, in the event of a fracture occurring to an array of fibres, the two parts of the composition can be urged under pressure from the fibres to combine in the region of the fracture and around the fibres to fill any cavity left by the fracture, and can then cure and close the fracture. It is one of the important characteristics of the present invention that pressure is applied to the fluids for otherwise, as has been found in the prior art, the components of the adhesive could simply combine at the common surface of the components and begin to cure within the fibres themselves, thereby blocking further flow of fluid material to the point of fracture.

It will be observed from a study of Figure 16 that the pairs of fibres 32, 34 are spaced apart from one another. It is not essential to have the pairs of fibres closely adjacent as one might have with an un-pressurised arrangement where reliance on un-pressurised seepage only would require that pairs of fibres be more closely spaced. With a pressurised system, the pressure exerted on fluids in the fibres can cause the fluid materials within the fibres to be forced to permeate any crack or fracture that might occur adjacent the point of fracture.

To this end, as described below, the fibres are connected to reservoirs of the fluids so that any migration of fluid under pressure from fibres can be replenished immediately and the pressure can be maintained.

As previously discussed, the composition may be an aerobically curable composition or an anaerobically curable composition

### Example

Struers 'Epofix' two-part resin was used. The amine hardener moiety was used undiluted while the epoxy moiety was diluted with a solvent to facilitate filling of fibres. The fibre ID was of the order of 5µm. Filling of the fibres was undertaken at between 20C and 25C. The proportions by weight of resin, diluent and hardener are as shown below.

| | | |
|---|---|---|
| Epoxy | Solvent(parts) | Hardener |
| 2500 | acetonitrile (200) | 300 |
| 2500 | acetone (500ml) | 300 |
| 2500 | chloroform (500ml) | 300 |
| 2500 | dichloromethane (500) | 300 |

The mixtures were cured at room temperature for approximately 12 hours in a first experiment and within 2 hours in a second experiment when the temperature was held at 60C.

Further experiment using much larger ID fibres (60µm bore) showed that the quantity of solvent could be halved.

A two part adhesive composition that can be deployed in a structure according to the present invention may, as previously stated, be heat curable or a thermoset composition.

If heat-curable or thermoset compositions are to be deployed, one fibre adjacent an adhesive-carrying fibre can provide heating means for heating the composition to accelerate curing or hardening either in the form of a heating element 37 or in the form of a heating fluid, or, as also discussed above, the fibre carrying the adhesive composition can itself be coated either internally or externally with a resistive coating that can conduct current and heat the fibre and its contents.

One or both parts of the composition may be coloured for identification purposes using a range of proprietary dyes or colouring agents Alternatively the two-part composition can be selected from an adhesive composition that undergoes a colour change when curing. A suitable composition is Tra-Bond F230 supplied by Tra-Con Inc. which in uncured state is light green and in cured state is reddish amber.

The distribution of the pairs of fibres throughout the structure useful for understanding the present invention is such that a repair can be effected anywhere within the structure with particular concentration of the pairs of fibres in regions of the structure that are most critical. It will therefore be understood that Figure 16 is only representational of an example useful for understanding the present invention and does not necessarily indicate the precise arrangement of fibres within a structure.

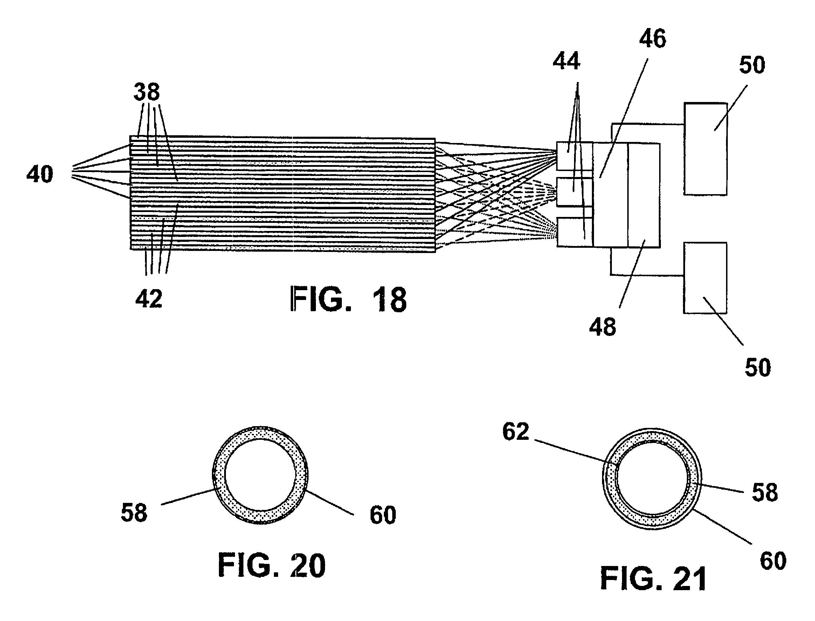

The pairs 32 of fibres 34, 36 are connected to reservoirs of adhesive compositions, as shown in Figure 18. These fibres are shown in Figure 16 as arranged in groups 38, 40 and 42 for the purpose described below.

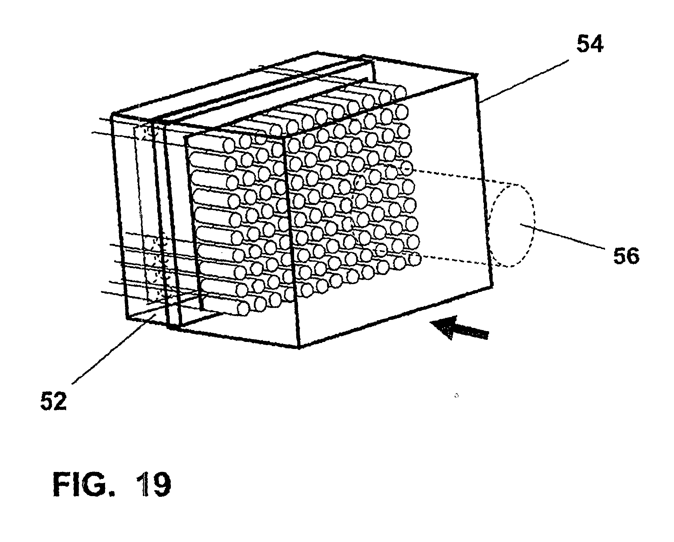

The means for filling and emptying and replacing the components of the adhesive compositions in the fibres, and for maintaining those fluid components under pressure is provided by pressurised systems provided via valve units 44 that can either be specific to each group of fibres or can be specific to each component of such compositions, or both. As shown in Figure 18, such valve units are shown as connected to the specific groups of fibres. The pressure systems further comprise a plurality of pump units 46 which can deliver fluid components from component reservoirs 48 to the fibres 38,40 and 42 under control of pressure sensor devices 50 that are arranged to sense any change in pressure in the fibres. The third group of fibres 42 can serve to deliver an accelerant or a catalyst or both to the fibres so that, as fibres fracture at any location, such accelerant or catalyst can be released at the point of fracture to promote curing of the components of the adhesive composition. In addition to the fluid reservoirs storing the components of the adhesive compositions, additional reservoirs (not shown) can be provided for diluting the fluid components if necessary. Each of these reservoirs can be uncoupled from the valve units and replaced so that the components therein can be replaced or replenished as required to suit prevailing circumstances. The reservoirs 48 and valve units 44 are ideally detachable from the fibres as explained with reference to Figure 19.

Figure 19 is a schematic view showing the general manner in which the valve units 44 and reservoirs 48 of Figure 18 can be coupled to and uncoupled from the fibres, and is explained with reference to a single array 38 of the three arrays of fibres 38, 40 and 42 shown in Figure 18. It is to be clearly understood that though Figure 19 illustrates only the general manner of coupling of one array of fibres, the same approach can be taken with all arrays of fibres. Where different arrays of fibres are intended to contain the same materials as one another, then those arrays can all be supplied from the same reservoir or from different reservoirs containing the same materials.

An alternative to the use of pumps, micropumps or the like would be the use of automatically-controlled pneumatic or hydraulic systems that could be attached to the fibres and exert preset pressures on the fluids in the fibres.

Depending upon the fluid materials that are contained within the hollow fibres, the pressure applied to those fluids may vary. It is not always, as with some commercial epoxy resins, necessary or appropriate to supply equal quantities of components of an adhesive composition to a fracture point. For example, epoxy resins that are available from the Henkel Aerospace Group under the trade name Loctite are available where the ratio of the quantity of the resin components to that of the curing agent or hardener is about 20:1. With fibres such as those that are used in a structure according to the present invention, it is not an easy task to position fibres within the structure such that they can be of relative internal diameters which will result in delivery of components and curing agent/hardener in such ratios. Instead, the present invention seeks to address this aspect by providing that the pump units or other pressure sources that may be used and/or the valve units be controlled so that, while pressure is maintained in the respective fibres an appropriate pressure is maintained in the fibres to deliver the correct quantities of fluid materials in the event of a fracture.

Fibres of the single array 38 are bundled together and entrained within a block of cured resin that is mounted in a casing 52. This casing 52 is mountable in sealable engagement with a casing 54 enclosing the associated valve unit and pump unit (not shown) and can be secured thereto by toggle clamps or the like (also not shown). The casing 54 is attached by an inlet hose 56 to an appropriate reservoir (not shown) in which adhesive composition is stored. The reservoir may be temperature controlled to maintain the composition in optimum condition. The reservoir itself can be uncoupled from the valve and pump units so that it can be replenished or replaced when necessary and the valve unit and pump unit can be disassembled for purposes of cleaning and maintenance. The use of reservoirs that can be readily uncoupled from the fibres of a structure has the advantage over the prior art in that it renders the structure re-configurable so that the structure can be made 'mission specific'. A further advantage is that they avoid problems with 'shelf life' of the compositions in that it is possible to use 'in date' 'plug in' reservoirs of materials. The structure is also 'rechargeable'. The ability to have a pressurised arrangement might also promote sealing of a damaged site without necessarily blocking the artery. Use of multiple fine-bore hollow fibre allows for redundancy.

As mentioned above, the individual components may be individually coloured so that they can be readily identified. Alternatively, the components can be selected from those which, when combined, can change colour to provide for ready identification as required. Coloration of components can have significant advantage in a self repair system as applied to, say, an aircraft, where damage may occur and is more likely to occur while the aircraft is in flight, and the damage is repaired while the aircraft is in flight to be assessed when the aircraft has landed. Though self-repair with a structure according to the present invention and performing a method according to the present invention can be effected, it is essential that the fact of the self repair itself must be noted. Colouring assists with so doing.

Other means can be adopted to identify the creation of a fracture in a fibre or group of fibres, including magnetic, electric, electromagnetic, electro-optical and optical arrangements which have been recited in the literature.

As an alternative to the use of pairs of fibres for carrying components of the composition(s), it is also envisaged within the scope of the present invention that single fibres can be deployed within the structure where each single fibre carries one component of the composition and the fibre itself is coated along its exterior with the second component. As previously discussed, where one component is coated onto the exterior of a fibre, it is essential that that component does not simply interact with the enclosing body of resin that keys the fibres together. Where that resin body is formed of epoxy resin, there is the possibility of either hardener or the resin component mixture interacting with the resin body which, as the structure is formed, may still not be perfectly cured. For this purpose, the coating, be it hardener or a component mixture, is admixed with a retarding agent that prevents the coating from reacting with the resin body in which the fibre is set. An example of such a fibre is shown in Figure 20 where the fibre is clearly shown at 58 and the coating is indicated at 60.

A similar fibre to that shown in Figure 20 is shown in Figure 21 where, in addition to the external coating 62, the fibre is internally coated with an electrically resistive metallic coating whereby heat may be applied to both composition components within the fibre and to the external coating to accelerate curing when a heat-curable or thermosetting composition is deployed.

It will be readily appreciated from the above description that the self-repair concept of the present invention is equally applicable to repair of fabric materials as it is to rigid bodies such as aircraft panels. Fabric materials can be formed of natural and/or synthetic fibres and can include fibre arrangements within them or be constructed from fibres which carry self-repair capability. For example, fabric materials of wool or silk, which are keratin-based materials, can include hollow fibres therein that contain keratin, which are polypeptide chains, in some of the fibres, and a linking agent in adjacent fibres so that in the event of a tear in such a fabric, self-repair capability is available. Where man-made or synthetic fibres are used, then hollow fibres containing appropriate self-repair fluids can be included. It is also possible, within the scope of the invention as defined by the claims, to create fabric materials entirely from such hollow fibres.

## Claims

1. A structure comprising a body which is at least partially formed of hollow fibres which are assembled in a rigid matrix of cured resin material, the fibres comprising a plurality of sets of fibres arranged in groups of arrays of fibres, each of which comprises hollow fibres each at least partially contain a first, pressurised fluid, part of a two-part curable resinous composition, a second part of the two-part resinous composition being provided around said each hollow fibre containing said first, pressurised fluid, part, whereby, in the event of a fracture occurring to an array of fibres, the two parts of the composition can combine in the region of the fracture to cure the adhesive composition and thereby close the fracture.

2. A structure according to claim 1 wherein the second part of the two-part resinous composition is embedded in the matrix adjacent said each hollow fibre.

3. A structure according to claim 2 wherein the second part of the two-part resinous composition is provided in the form of a coating on exterior surfaces of said each hollow fibre.

4. A structure according to any one of claims 1 to 3 wherein, within the structure, hollow fibres contain colour coding fluids under pressure to indicate different regions of the structure so that, in the event of a fracture occurring therein, location of a fracture can be visually identified.

5. A structure according to any one of the preceding claims wherein the composition is an aerobically curable composition.

6. A structure according to any one of claims 1 to 4 wherein the composition is an anaerobically curable composition.

7. A structure according to any one of claims 1 to 5 wherein at least one part of the adhesive composition is carried by a volatile carrier adapted to evaporate at a point of fracture in a fibre.

8. A structure according to any one of claims 1 to 7 wherein each of the hollow fibres has an external diameter up to about 100 microns.

9. A structure according to claim 8 wherein each of the hollow fibres has an internal diameter in the range of up to about 70 microns.

10. A structure according to claim 8 or claim 9 wherein the viscosity of the fluid composition is less than 1000 cP.

11. A structure according to claim 10 wherein the viscosity of the fluid composition is less than 250 cP.

12. A structure according to claim 9 wherein each of the hollow fibres has an external diameter in the range of about 10 microns to about 12 microns.

13. A structure according to claim 12 wherein each of the hollow fibres has an internal diameter in the range of about 5 to about 7 microns,

14. A structure according to any one of claims 1 to 13 wherein the hollow fibres are formed of materials selected from the group consisting of carbon, glass and polymer material.

15. A structure according to any one of claims 1 to 14 and further comprising solid fibres which are formed of materials selected from the group consisting of carbon, glass and polymer material.

16. A structure according to claim 19 wherein the two part composition is selected from compositions that undergo a colour change when curing.

17. An airborne, ground-based or waterborne vehicle including one or more structures as set forth in any one of the preceding claims.

## Patentansprüche

1. Eine Struktur, die einen Körper beinhaltet, der zumindest teilweise aus hohlen Fasern gebildet ist, die in einer starren Matrix aus einem gehärteten Harzmaterial zusammengefügt sind, wobei die Fasern eine Vielzahl von Sätzen von Fasern beinhalten, die in Gruppen von Anordnungen von Fasern arrangiert sind, von denen jede hohle Fasern beinhaltet, von denen jede zumindest teilweise einen ersten Teil aus unter Druck stehender Flüssigkeit einer zweiteiligen härtbaren harzhaltigen Zusammensetzung enthält, wobei ein zweiter Teil der zweiteiligen harzhaltigen Zusammensetzung um die hohle Faser, die den ersten Teil aus unter Druck stehender Flüssigkeit enthält, bereitgestellt ist, wobei in dem Fall, dass ein Bruch in einer Anordnung von Fasern auftritt, sich die zwei Teile der Zusammensetzung in dem Bereich des Bruchs vereinigen können, um die adhäsive Zusammensetzung zu härten und den Bruch **dadurch** zu schließen.

2. Struktur gemäß Anspruch 1, wobei der zweite Teil der zweiteiligen harzhaltigen Zusammensetzung in der Matrix angrenzend an die jede hohle Faser eingebettet ist.

3. Struktur gemäß Anspruch 2, wobei der zweite Teil der zweiteiligen harzhaltigen Zusammensetzung in der Form einer Beschichtung auf äußeren Oberflächen der jeden hohlen Faser bereitgestellt ist.

4. Struktur gemäß einem der Ansprüche 1 bis 3, wobei innerhalb der Struktur hohle Fasern unter Druck stehende Flüssigkeiten zur Farbkennzeichnung enthalten, um unterschiedliche Bereiche der Struktur anzugeben, so dass im Fall eines darin auftretenden Bruchs die Stelle eines Bruchs visuell identifiziert werden kann.

5. Struktur gemäß einem der vorhergehenden Ansprüche, wobei die Zusammensetzung eine aerob härtbare Zusammensetzung ist.

6. Struktur gemäß einem der Ansprüche 1 bis 4, wobei die Zusammensetzung eine anaerob härtbare Zusammensetzung ist.

7. Struktur gemäß einem der Ansprüche 1 bis 5, wobei zumindest ein Teil der adhäsiven Zusammensetzung von einem leicht flüchtigen Träger getragen wird, der angepasst ist, um an einem Bruchpunkt in einer Faser zu verdampfen.

8. Struktur gemäß einem der Ansprüche 1 bis 7, wobei jede der hohlen Fasern einen externen Durchmesser von bis zu etwa 100 Mikrometer aufweist.

9. Struktur gemäß Anspruch 8, wobei jede der hohlen Fasern einen internen Durchmesser in dem Bereich von bis zu etwa 70 Mikrometer aufweist.

10. Struktur gemäß Anspruch 8 oder Anspruch 9, wobei die Viskosität der Fluidzusammensetzung weniger als 1000 cP beträgt.

11. Struktur gemäß Anspruch 10, wobei die Viskosität der Fluidzusammensetzung weniger als 250 cP beträgt.

12. Struktur gemäß Anspruch 9, wobei jede der hohlen Fasern einen externen Durchmesser in dem Bereich von etwa 10 Mikrometer bis zu etwa 12 Mikrometer aufweist.

13. Struktur gemäß Anspruch 12, wobei jede der hohlen Fasern einen internen Durchmesser in dem Bereich von etwa 5 bis etwa 7 Mikrometer aufweist.

14. Struktur gemäß einem der Ansprüche 1 bis 13, wobei die hohlen Fasern aus Materialien gebildet sind, die aus der aus Kohlenstoff, Glas und Polymermaterial bestehenden Gruppe ausgewählt sind.

15. Struktur gemäß einem der Ansprüche 1 bis 14 und ferner beinhaltend Vollfasern, die aus Materialien gebildet sind, die aus der aus Kohlenstoff, Glas und Polymermaterial bestehenden Gruppe ausgewählt sind.

16. Struktur gemäß Anspruch 19, wobei die zweiteilige Zusammensetzung aus Zusammensetzungen, die beim Härten einen Farbwechsel durchmachen, ausgewählt ist.

17. Ein Luft-, Boden- oder Wasserfahrzeug, das eine oder mehrere Strukturen gemäß einem der vorangehenden Ansprüche umfasst.

## Revendications

1. Une structure comprenant un corps qui est au moins partiellement formé de fibres creuses, lesquelles sont assemblées dans une matrice rigide de matériau à base de résine durcie, les fibres comprenant une pluralité de séries de fibres agencées en groupes de réseaux de fibres, lesquels comprennent chacun des fibres creuses contenant chacune au moins partiellement une première partie fluide pressurisée d'une composition résineuse durcissable en deux parties, une seconde partie de la composition résineuse en deux parties étant disposée autour de chaque dite fibre creuse contenant ladite première partie fluide pressurisée grâce à quoi, dans l'éventualité d'une fracture se produisant sur un réseau de fibres, les deux parties de la composition peuvent se combiner dans la région de la fracture afin de durcir la composition adhésive et fermer, par là-même, la fracture.

2. Une structure selon la revendication 1 dans laquelle la seconde partie de la composition résineuse en deux parties est implantée dans la matrice adjacente à chaque dite fibre creuse.

3. Une structure selon la revendication 2 dans laquelle la seconde partie de la composition résineuse en deux parties est disposée sous la forme d'un revêtement sur des surfaces extérieures de chaque dite fibre creuse.

4. Une structure selon l'une quelconque des revendications 1 à 3 dans laquelle, à l'intérieur de la structure, les fibres creuses contiennent des fluides de codage couleur sous pression afin d'indiquer différentes régions de la structure, de sorte que, dans l'éventualité d'une fracture se produisant dans celle-ci, l'emplacement d'une fracture peut être visuellement identifié.

5. Une structure selon l'une quelconque des revendications précédentes dans laquelle la composition est une composition durcissable par voie aérobie.

6. Une structure selon l'une quelconque des revendications 1 à 4 dans laquelle la composition est une composition durcissable par voie anaérobie.

7. Une structure selon l'une quelconque des revendications 1 à 5 dans laquelle au moins une partie de la composition adhésive est supportée par un support volatil adapté pour s'évaporer au niveau d'un point de fracture dans une fibre.

8. Une structure selon l'une quelconque des revendications 1 à 7 dans laquelle chacune des fibres creuses a un diamètre externe allant jusqu'à environ 100 microns.

9. Une structure selon la revendication 8 dans laquelle chacune des fibres creuses a un diamètre interne compris dans la gamme allant jusqu'à environ 70 microns.

10. Une structure selon la revendication 8 ou la revendication 9 dans laquelle la viscosité de la composition fluide est inférieure à 1000 cP.

11. Une structure selon la revendication 10 dans laquelle la viscosité de la composition fluide est inférieure à 250 cP.

12. Une structure selon la revendication 9 dans laquelle chacune des fibres creuses a un diamètre externe compris dans la gamme allant d'environ 10 microns à environ 12 microns.

13. Une structure selon la revendication 12 dans laquelle chacune des fibres creuses a un diamètre interne compris dans la gamme allant d'environ 5 à environ 7 microns.

14. Une structure selon l'une quelconque des revendications 1 à 13 dans laquelle les fibres creuses sont formées en matériaux sélectionnés dans le groupe consistant en : le carbone, le verre et le matériau polymère.

15. Une structure selon l'une quelconque des revendications 1 à 14 et comprenant en outre des fibres pleines qui sont formées en matériaux sélectionnés dans le groupe consistant en : le carbone, le verre et le matériau polymère.

16. Une structure selon la revendication 19 dans laquelle la composition en deux parties est sélectionnée parmi des compositions qui subissent un changement de couleur lors du durcissement.

17. Un véhicule aérien, terrestre ou maritime comportant une ou plusieurs structures telles qu'énoncées dans l'une quelconque des revendications précédentes.
